(19) **Europäisches Patentamt / European Patent Office / Office européen des brevets**

(11) **EP 4 574 450 A1**

(12) # EUROPEAN PATENT APPLICATION

(43) Date of publication:
**25.06.2025 Bulletin 2025/26**

(21) Application number: **23220089.9**

(22) Date of filing: **22.12.2023**

(51) International Patent Classification (IPC):
**B60C 1/00** (2006.01)    **C08L 9/06** (2006.01)

(52) Cooperative Patent Classification (CPC):
(C-Sets available)
**C08L 9/06; B60C 1/00**    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Bridgestone Europe NV/SA
1930 Zaventem (BE)**

(72) Inventors:
• **AURISICCHIO, Claudia
  00128 Roma (IT)**
• **MARTINO, Giorgia
  00128 Roma (IT)**
• **SPIEZIA, Antonella
  00128 Roma (IT)**

(74) Representative: **Marchetti, Alessio
  Bridgestone Europe NV/SA - Italian Branch
  Technical Center
  Via del Fosso del Salceto, 13/15
  00128 Roma (IT)**

(54) **VEHICLE TIRE COMPOSITIONS COMPRISING RICE HUSK ASH SILICA**

(57)    The present invention relates to vehicle tire compositions, to methods for their preparation and to vehicle tires made from these compositions. The compositions contain rice husk ash silica as a reinforcing agent and lignin sulfonate as a stiffness enhancer. The present invention also relates to the use of rice husk ash silica in vehicle tire compositions that comprise lignin sulfonate.

EP 4 574 450 A1

(52) Cooperative Patent Classification (CPC): (Cont.)

C-Sets
**C08L 9/06, C08L 7/00, C08L 97/005, C08L 19/003,
C08K 3/36, C08K 3/04, C08K 3/06**

## Description

### Field of the Invention

The present invention relates to vehicle tire compositions, to methods for their preparation and to vehicle tires made from these compositions. The compositions contain rice husk ash silica as a reinforcing filler and lignin sulfonate as a stiffness enhancer. The present invention also relates to the use of rice husk ash silica in vehicle tire compositions that contain lignin sulfonate.

### Background of the Invention

Reinforcing fillers have been used in tires for many years to improve the mechanical properties of tire compositions. Traditionally fillers have included carbon black, chalk, talc, kaolin, bentonite, titanium dioxide, and silica. Silica has been found to be particularly advantageous in terms of lowering rolling resistance and improving traction, particularly on wet surfaces. Silica derived from sand is traditionally used.

In recent years the tire industry has made efforts to improve its environmental sustainability at all levels. One focus has been to use raw materials that are more environmentally sustainable, and in particular those that can be obtained from renewable sources. In this regard, silica obtained from rice husk ash (herein referred to as "RHA silica") has been used in tire compositions.

Other materials that have been proposed for use in the tire industry in an attempt to improve sustainability include lignin and lignin derivatives such as lignin sulfonates. Lignin is a highly cross-linked polymer formed from phenolic compounds that forms a key structural component in the cell walls of various plants, especially in wood and bark. Lignin is typically required to be removed from wood pulp in the manufacture of paper and is thus a by-product from paper making. However, it can be recovered by other processes. The process used in its production produces different types of lignin materials. Typical recovery processes, such as the sulphite pulping process, result in the formation of water-soluble lignosulfonates which contain sulfonated lignin polymers. These may be referred to as "lignin sulfonates", "lignosulfonates" or "sulphite lignins". Such materials have good mechanical, physico-chemical and biodegradability properties, and excellent thermal stability, and have been proposed for use in tire compositions to improve the dispersibility of reinforcing agents such as carbon black.

There is a continuing desire to improve the sustainability of tires, and the aim of the invention is to do this without adversely affecting the performance properties of the tire.

### Summary of the Invention

The inventors have surprisingly found that when RHA silica is used in place of sand silica in vehicle tire compounds containing lignin sulfonate, the efficacy of the lignin sulfonate as a stiffness enhancer is improved.

Due to its natural origin, RHA silica may contain traces of metals derived from soil or fertilizers applied during rice cultivation. Without being bound by theory, the inventors believe that the higher metal contents present in RHA silica, for example potassium ions, interact with the lignin sulfonate favouring a higher compatibility between RHA silica and the lignin sulfonate, rather than sand silica and the lignin sulfonate.

According to a first aspect, the invention relates to a vehicle tire composition comprising: 100 phr of a rubber component; 50 to 160 phr silica obtained from rice husk ash; and 2 to 25 phr lignin sulfonate.

According to a second aspect, the invention relates to a vehicle tire comprising a vehicle tire composition according to the first aspect.

According to a third aspect, the invention relates to a process for producing a vehicle tire composition according to the first aspect, said process comprising the steps of introducing a silica filler and lignin sulfonate into a rubber component to produce a vulcanizable rubber compound; and subjecting said vulcanizable rubber compound to vulcanization by heating to a predetermined temperature and for a predetermined time; wherein the silica filler is obtained from rice husk ash.

According to a fourth aspect, the invention relates to the use of rice husk ash silica in a vehicle tire composition, wherein the vehicle tire composition comprises 100 phr of a rubber component and 2 to 25 phr lignin sulfonate.

According to a fifth aspect, the invention relates to the use of rice ash husk silica in a vehicle tire composition that contains lignin sulfonate to improve the stiffness enhancing properties of the lignin sulfonate.

### Detailed Description of the invention

The invention relates to a vehicle tire composition comprising 100 phr of a rubber component. In line with convention, "phr" is parts per hundred parts of the rubber component. By "rubber component", we mean a component in the composition which is a rubber. The term "rubber", as used herein, is intended to include natural rubber and synthetic rubbers. The terms "rubber" and "elastomer" are used interchangeably, unless otherwise specified.

Any known rubber component or blend of rubber components may be used in the vehicle tire compositions according to the invention and those skilled in the art can readily select a suitable rubber or blend of rubbers having in mind the intended use of the composition. Non-limiting examples of suitable rubbers for use in the composition are well-known to those skilled in the art and include natural rubber (NR), synthetic polyisoprene rubber, styrene-isoprene rubber, styrene-butadiene rubber, styrene-isoprene-butadiene rubber, butadiene-isoprene rubber, polybutadiene, butyl rubber, neoprene, acrylonitrile-butadiene rubber (NBR), silicone rubber, fluoroelastomers, ethylene acrylic rubber, ethylene-propylene rubber, ethylene-propylene terpolymer (EPDM), ethylene vinyl acetate copolymer, epichlorohydrin rubber, chlorinated polyethylene-propylene rubber, chlorosulfonated polyethylene rubber, hydrogenated nitrile rubber, and tetrafluoroethylene-propylene rubber. The ratio of any rubber blends can be selected according to need, for example based on the viscoelastic properties of the tire composition. Those skilled in the art can readily determine which elastomers may be appropriate and their relative amounts to provide a desired viscoelastic property range.

In one embodiment, the rubber component contains repeat units derived from butadiene. Examples of such rubbers include, but are not limited to, styrene butadiene rubber (SBR) and butadiene rubber (BR). In one embodiment, the rubber for use in the invention is SBR, which is intended to refer generally to any synthetic rubber made by polymerisation of styrene and butadiene monomers, i.e. any styrene-butadiene copolymer. SBR is commonly used in the tire industry and can be made by well-known methods, such as by co-polymerisation of the corresponding monomers in emulsion, suspension or in solution. Styrene and butadiene monomers may be selected in suitable ratios according to the intended use and properties of the rubber compound.

In one embodiment, the rubber component comprises styrene butadiene rubber (SBR), natural rubber (NR), butadiene rubber (BR), or any combination thereof. In one embodiment, the rubber component comprises or consists of solution-polymerised styrene butadiene rubber (SSBR) and natural rubber (NR). The rubber component can comprise 40 to 80 phr SSBR and 20 to 60 phr NR, preferably 50 to 70 phr SSBR and 30 to 50 phr NR, for example about 60 phr SSBR and about 40 phr NR.

NR is a natural product that can advantageously be included to improve the sustainability credentials of the tire composition. In addition, when RHA silica is used in place of sand silica in rubber compounds containing a high loading of NR, the inventors believe that the higher metal contents in RHA silica compared to sand silica may interact with the polar impurities present in NR, leading to a higher compatibility between RHA silica and NR, rather than sand silica and NR. This improves the dispersibility of the silica, thereby the filler dispersion of uncured (by RPA) and cured (by Payne Effect) may be improved compared to the corresponding compounds with sand silica. In addition, in tire compositions the dispersion of filler evaluated by the shape of the tan delta curve (tan delta 0°C/60°C) can be better when using RHA silica, and RR as predicted by tan delta @ 60°C may also be improved. Accordingly, in one embodiment, the rubber component comprises 35 to 90 phr, preferably 50 to 80 phr or 60 to 70 phr natural rubber.

The vehicle tire composition comprises silica obtained from rice husk ash, by which we mean silica that has been obtained from ash resulting from incinerating husks of rice. This is referred to herein as "rice husk ash silica" or "RHA silica".

The compositions comprise from 50 to 160 phr RHA silica. In one embodiment, the compositions comprise 50 to 120 phr RHA silica, preferably 50 to 90 phr RHA silica, for example 60 to 80 phr RHA silica or 60 to 70 phr RHA silica. In general, the compositions can comprise from 50, 60, 70 or 80 phr RHA silica, and up to 80, 90, 100, 110, 120, 130, 140, 150 or 160 phr RHA silica, with any upper and lower limits being combinable.

Rice is one of the world's oldest crops, is cultivated in over 100 countries and consumed as a staple food by more than half of the world's population. A rice husk is the outer covering of a rice grain and during processing of rice for food, a huge quantity of rice husks is produced as a waste material. Rice husks are difficult to use efficiently due to having a hard surface, poor nutritive value, high silicon content and low bulk density. Rice husks also do not decompose easily, so most of the rice husk produced globally ends up either being dumped or burnt in open space which causes damage to the land and environmental pollution. Currently one of the most commonly used disposal methods is incineration in thermal plants & gasification plants for electric power generation, although this has the problem of creating very high quantities of RHA. Accordingly, using RHA silica in tires would be a welcome solution to this serious problem.

Rice husk can be directly incinerated to produce silica of varying purity, with or without the use of pre-treatments as explained in Maejo Int. J. Sci. Technol. 2012, 6(03), 430-448. The transformation of raw husk to clear white, grey or pale grey ash is critically dependent on the temperature of incineration. Temperatures between 300-450°C only transform fresh rice husk to carbonised husk, while temperatures between 500-650°C produce white or grey ash, depending on soaking time (the duration for which incineration is allowed to proceed at the stated temperature range). Rice husk ash produced at a temperature of between 500-650°C with incineration holding (soaking) time of 2.5 to 6 hours is considered ideal for producing white amorphous silica while crystallinity sets in when the incineration temperature increases beyond 700°C.

Direct incineration of rice husk to produce rice husk ash can be accomplished by known methods, such as in open air, in a muffle furnace, in a fluidised bed combustion technique or by direct incineration in a TORBED reactor (Indian technology). The fluidized bed process is a practical and flexible way to produce different grades of rice husk ash (RHA), and can lead to lower levels of ignition and carbon loss, and thus higher levels of silica compared with other burning conditions. Hydrothermal methods have also been used in the production of rice husk ash, in conjunction with an incineration step.

The chemical components of rice husk ash are found to vary in different samples due to the different locations, varieties, climate, soil, and fertilizer used during rice cultivation. The percentage of silica ($SiO_2$) in the ash can vary, and is usually more than 80 or 90%, and up to 99% with the remainder being impurities including $K_2O$; $P_2O_5$; $CaO$; $SO_3$; $MgO$; $Al_2O_3$; $Fe_2O_3$; $MnO$; $Rb_2O$; $ZnO$; $CuO$ and $Na_2O$. The composition of rice husk ash by geographical location is reported by Maejo Int. J. Sci. Technol. 2012, 6(03), 430-448 in table 2, which shows that the natural level of potassium oxide in the rice husk ash can range from 1.23 to 4.76%, i.e. 12,300 to 46,700 ppm. The level of impurities for both sand silica and RHA silica will depend on the production method, but in general RHA silica has a higher metal content, particularly a higher potassium content than sand silica.

The inventors have found that when the silica has a typically high potassium content, agglomeration of the silica can occur, which leads to the silica being less easy to disperse in the rubber component and can ultimately lead to unfavourable mechanical properties. Accordingly, in one embodiment, the RHA silica is selected to have a potassium content of less than or equal to 500, 450, 400 or 350 ppm based on the silica. The silica can have a potassium content of greater than or equal to 100, 150, 200, 250 or 300 ppm based on the silica. Any reference herein to the potassium content of any silica is intended to refer to the potassium ion ($K^+$) content of the silica. The potassium content can be determined by inductively coupled plasma (ICP) - optical emission spectroscopy (OES) as described in the Examples. In this method the silica is dispersed in water and HCl is added to yield $K^+$ ions in solution. The $K^+$ ions are detected and measured.

Several ways to increase the purity of RHA silica, and reduce the level of metallic impurities including potassium, are known in the art and typically involve pretreating the rice husks before incineration to produce rice husk ash. Various pre-treatment methods have been used including acid leaching, basic pre-treatment and microbiological pre-treatment, usually in combination with some acids. For acid leaching, different kinds of acids have been used, with HCl proving effective at removing metallic impurities. $H_2SO_4$, $HNO_3$, and organic acids including citric, acetic or oxalic acid can also be used. Alkalis such as NaOH and $NH_4OH$ can also be used to pre-treat rice husk to reduce the potassium level, as can microbial fermentation. These methods are summarised in Maejo Int. J. Sci. Technol. 2012, 6(03), 430-448, and Chemistry, Processing and Utilization, 2019, 207 the entire contents of which are incorporated herein by reference, and can be used to produce RHA silica having a potassium content of less than 500 ppm.

When ash from acid-leached rice husk is ground, finer particles with homogeneous size distribution, higher surface area, and higher microporosity can be obtained. Acid leaching of rice husk is usually conducted before combustion to give silica powder of high specific surface area and higher quality. After combustion, if potassium ions are present at a high level, the surface area decreases due to strong interaction between the silica and the potassium ions. This is why in the present invention the level of potassium is preferably less than or equal to 500 ppm.

Silica can also be extracted from rice husk ask by precipitation. The process can be characterized by extraction of silica gel with NaOH and precipitation of silica with $CO_2$. This has the environmental advantage that NaOH and $CO_2$ can be regenerated with fresh calcium hydroxide, as also set out in Chemistry, Processing and Utilization, 2019, 207. A similar process in disclosed in EP 3 770 115, which is incorporated by reference, which involves dissolving rice husk ask and an inorganic alkali such as NaOH in water to give a slurry of a silicate, subjecting the slurry to solid-liquid separation, and drying to provide the silica.

The inventors have also discovered that the weak (WK) coefficient of the silica can also be an important indicator of good performance in a tire composition, and in one embodiment the RHA silica has a weak coefficient of less than or equal to 20, preferably less than or equal to 15 or 10.

Weak coefficient, also known as WK, is measured by laser light scattering as described in the Examples, and is an index of the silica dispersibility and can be described as the ratio between larger agglomerate sizes and smaller ones. The higher the WK the lower the dispersibility the silica and the larger the agglomerates formed. Dispersion of any reinforcing filler and the filler-rubber interaction are key properties when preparing high performance rubber compounds having the required mechanical properties. Accordingly, the WK is linked to the performance properties.

RHA silica having a potassium content of less than or equal to 500 ppm and a weak coefficient of less than 20 is commercially available from various sources. One example of such a product is RHA silica sold under the trade name K160 by Wilmar.

Silica agglomeration also has the effect of reducing the surface area of the silica. Accordingly, in one embodiment, the RHA silica has a CTAB surface area of at least 100 m²/g, preferably at least 120 m²/g, preferably at least 140 m²/g. The CTAB surface area can be up to 220 m²/g, preferably up to 200 m²/g, preferably up to 170 m²/g. CTAB surface area is measured according to ISO 5794-1G as set out in the Examples.

The vehicle tire composition also comprises lignin sulfonate. By "lignin sulfonate" we mean lignin which comprises at least one sulfonate moiety, i.e. a sulfonated derivative of lignin. As will be understood, the term "sulfonate" refers to a salt or ester of a sulfonic acid. Lignin sulfonates may, for example, be produced during the sulphite pulping process of wood. During this process, lignin is extracted from wood chips and is then sulfonated using hydrogen sulphite.

The sulfonating process introduces sulfonic acid groups onto the lignin structure resulting in a water-soluble polymer. Other known production methods may, however, be used to produce the lignin sulfonate.

For use in the invention, the lignin sulfonate may comprise one or more alkali metal salts or alkaline earth metal salts of lignin sulfonic acid. Specific examples of such salts include potassium salts, sodium salts, calcium salts, magnesium salts, lithium salts and barium salts. Combinations of one of more of these salts may be used. Other salts include ammonium salts. In one embodiment, the lignin sulfonate for use in the invention is provided in the form of a sodium salt.

Lignin sulfonates are available commercially, for example in the form of calcium, sodium, ammonium and magnesium lignosulfonates. One example of such a product is a water-soluble sodium lignosulfonate supplied by Borregaard Lignotech under the trade name Borresperse NA. Borresperse NA is based on sodium lignosulfonate derived from spruce wood sulphite liquor and is supplied as a water-soluble powder.

The amount of lignin sulfonate to RHA silica can be selected depending on the overall composition. In one embodiment, the ratio of lignin sulfonate to RHA silica is from 0.01:1 to 0.5:1, preferably 0.02:1 to 0.5:1, for example about 0.15:1.

Other than the RHA silica, lignin sulfonate and the rubber component, the vehicle tire composition may comprise other components. Further components can include additional polymers, processing aids (such as oils, waxes, resins and plasticisers), curing systems (such as vulcanising agents, vulcanisation accelerators, and vulcanisation accelerator auxiliaries), anti-degradants (such as antioxidants or antiozonants), pigments, additional fillers, compatibilising agents for the fillers (such as silane coupling agents or covering agents), fibres, etc. Those skilled in the art can readily select a combination of vulcanizable rubber compounds and their respective amounts for subsequent mixing and vulcanization according to the specific rubber product which is desired. Depending on the intended use of the vulcanized material, these additives can be selected and used in the conventional amounts.

Processing aids improve the processability of the compositions and include oils, such as mineral oils, vegetable oils, synthetic oils, or any mixtures thereof. These may be used in an amount of from about 5 to 75 phr, preferably from about 10 to 50 phr. Typical processing aids include oils, such as aromatic oils. Examples of such oils include Treated Distillate Aromatic Extract (TDAE), Residual Aromatic Extract (RAE), Mild Extract Solvate (MES), and bio-based oil seed derivatives. The oil for use in the tire compositions of the present invention is not particularly limited and may be any of those known to the person skilled in the art. For example, the oil may be one or more selected from the group consisting of processed oils such as aromatic oils, naphthenic oils and paraffin oils, vegetable oils such as coconut oil, synthetic oils such as alkylbenzene oils and castor oils.

The vulcanising agent of the compositions is not particularly limited and may be any of those generally known in the art. For example, the vulcanising agent may be sulfur. The amount of the vulcanising agent is not particularly limited, and an amount effective to achieve a satisfactory cure of the composition may readily be selected by those skilled in the art. The vulcanising agent (e.g. sulfur) may be used in an amount in the range from about 0.1 to about 10 phr, preferably from about 0.1 to about 5 phr, e.g. from about 0.5 to about 3 phr. For example, the tire composition may contain from 0.1 to 3 phr, preferably from 0.5 to 2 phr, e.g. from 1 to 1.5 phr, of the vulcanising agent.

The vulcanisation accelerator for use in the composition is not particularly limited and may be any of those generally known in the art. Accelerators include thiazoles, dithiocarbamates, thiurams, guanidines, and sulphonamides. Examples of suitable accelerators include thiazole type vulcanization accelerators such as 2-mercaptobenzothiazole (MBT), dibenzothiazyl disulphide (MBTS), N-cyclohexyl-2-benzothiazyl sulfenamide (CBS), and N-tert-butyl-2-benzothiazolyl sulfenamide (TBBS); guanidine type vulcanization accelerators such as 1,3-diphenyl guanidine (DPG); thiuram-based vulcanization accelerators such as tetramethyl thiuram disulphide, tetrabutyl thiuram disulfide, tetradodecyl thiuram disulfide, tetraoctyl thiuram disulfide, and tetrabenzyl thiuram disulfide; and dithiocarbamate compounds such as dimethyl dithiocarbamate zinc; and other dialkyl dithiophosphoric acid zinc. Preferably, the vulcanisation accelerator may be a combination of dibenzothiazyl disulfide (MBTS), N-cyclohexyl-2-benzothiazyl sulfenamide (CBS), 1,3-diphenyl guanidine (DPG), and/or tetrabenzylthiuram disulphide (TBZTD). The amount of vulcanisation accelerator for use in the compositions is not particularly limited and may, for example, be in the range from about 0.5 to about 10 phr, preferably from about 1 to about 8 phr, more preferably from about 2 to about 6 phr. Preferably, the vulcanisation accelerator may comprise N-cyclohexyl-2-benzothiazyl sulfenamide (CBS) in an amount from 1 to 3 phr, 1,3-diphenyl guanidine (DPG) in an amount of 0.1 to 2 phr, and tetrabenzylthiuram disulphide (TBZTD) in an amount of 0.1 to 2 phr.

The vulcanisation accelerator auxiliary for use in the compositions is not particularly limited and may be any of those known to the person skilled in the art. For example, the vulcanisation accelerator auxiliary may be zinc oxide (ZnO) and a fatty acid. The fatty acid may be any of saturated or unsaturated, or linear or branched fatty acid. The number of carbon atoms of the fatty acid is also not particularly limited, but may be from 1 to 30, or from 15 to 30. For example, the fatty acid may be one or more selected from the group consisting of cyclohexanoic acids (cyclohexane carboxylic acid), naphthenic acids having a side chain such as alkyl cyclopentane, saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid), unsaturated fatty acids such as methacrylic acid, oleic acid, linolic acid and linolenic acid, and resin acids such as rosin, tall oil acid and abietic acid. Preferably the vulcanisation accelerator auxiliary of the present invention is zinc oxide (ZnO) and stearic acid. The total amount of the vulcanisation accelerator auxiliary is not particularly limited, but may be from 1 to 10 phr, preferably from 1.5 to 7 phr, for example, from 2 to 5 phr. Preferably, zinc oxide may be used in an amount of from about 1 to about 10 phr, preferably from about 2 to about 5 phr, more preferably from about 2 to about 3 phr. Stearic acid may be used in an amount of from about 0.1 to about 5 phr, preferably from about 0.5 to about 3 phr.

Additional reinforcing fillers such as carbon black, carbon nanotubes, short carbon, polyamide, polyester, natural fibres, calcium carbonate, clay, alumina, aluminosilicates, etc. or any mixtures of these may also be present in the tire compositions of the present invention. In one embodiment it comprises aluminium hydroxide, preferably 5 to 20 phr aluminium hydroxide, as an additional inorganic filler.

Where carbon black is present, this may be furnace black, channel blacks, or lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. In one embodiment, the carbon black may be a recycled carbon black. The carbon black may be in pelletized form or an unpelletized flocculent mass. A specific example of the carbon black for use in the tire compositions of the present invention is a recycled carbon black supplied by Bolder Industries under the trade name Bolder Black REC CB. The amount of carbon black that may be present is not particularly limited, but may be from 0.1 to 10 phr, for example from 0.5 to 8 phr, or from 2 to 7 phr, e.g. from 4 to 6 phr.

Advantageously, the only silica-based filler present in the vehicle tire compositions of the present invention is RHA silica as herein described, i.e. no additional silica is present. The RHA silica may therefore constitute all of the silica filler material in the composition. In some embodiments, it may constitute all of the reinforcing filler in the tire composition. However, the presence of additional silica-based fillers or additional non-silica-based fillers is not necessarily precluded. Where any additional silica is present, it may be selected from any of those known in the art including, but not limited to, precipitated amorphous silica, wet silica (hydrated silicic acid), dry silica (anhydrous silicic acid), fumed silica, calcium silicate, aluminum silicate, magnesium silicate (e.g. $Mg_2SiO_4$, $MgSiOs$), magnesium calcium silicate ($CaMgSiO_4$), aluminum calcium silicate (e.g. $Al_2O_3.CaO_2SiO_2$).

The tire composition may comprise additional fillers known to those skilled in the art. For example, the tire compositions may comprise one or more additional fillers selected from the group consisting of aluminum hydroxide, talc, alumina ($Al_2O_3$), aluminium hydrate ($Al_2O_3.H_2O$), aluminum hydroxide ($Al(OH)_3$), aluminum carbonate ($Al_2(CO_3)_2$), aluminium magnesium oxide ($MgOAl_2O_3$), pyrofilite ($Al_2O_3.4SiO_2.H_2O$), bentonite ($Al_2O_3.4SiO_2.2H_2O$), mica, kaolin, glass balloon, glass beads, calcium oxide (CaO), calcium hydroxide ($Ca(OH)_2$), calcium carbonate ($CaCO_3$), magnesium carbonate, magnesium hydroxide ($Mg(OH)_2$), magnesium oxide (MgO), magnesium carbonate ($MgCO_3$), potassium titanate, barium sulfate, zirconium oxide ($ZrO_2$), zirconium hydroxide ($Zr(OH)_2.nH_2O$), zirconium carbonate ($Zr(CO3)_2$), crystalline aluminosilicates, reinforcing grades of zinc oxide (i.e. reinforcing zinc oxide). The amount of the further fillers may be from 5 to 200 phr, for example 10 to 150 phr or 25 to 100 phr.

The antidegradant for use in the tire compositions of the present invention is not particularly limited and may be any of those known to the person skilled in the art. The antidegradant may be an antioxidant and/or an antiozonant. For example, the antidegradant may be one or more selected from the group consisting of N-(1,3-dimethylbutyl)-N'-phenyl-p-phenylenediamine (6PPD), 2,2,4-trimethyl-1,2-dihydroquinoline polymer (TMQ) and N'-(1,3 dimethylbutylene)-3-hydroxy-naphthohydrazide (BMH). Preferably, the antidegradant is a combination of N-(1,3-dimethylbutyl)-N'-phenyl-p-phenylenediamine (6PPD), 2,2,4-trimethyl-1,2-dihydroquinoline polymer (TMQ) and N'-(1,3 dimethylbutylene)-3-hydroxy-naphthohydrazide (BMH). The amount of each antidegradant may be from 0.1 to 3 phr, preferably from 0.2 to 2 phr. The total amount of antidegradant may be from 0.1 to 5 phr, preferably 1 to 3 phr.

Covering agents may be used to reduce the formation of silica aggregates during compounding. If present, these may be used in an amount of up to 20 phr, preferably from about 1 to about 15 phr. In one embodiment, no additional covering agents are present. The covering agent is not particularly limited and may be any of those known in the art. Suitable silica-based covering agents include silanes such as alkylalkoxy silanes, e.g. hexadecyltrimethoxy silane, octyltriethoxy silane and hexyltrimethoxy silane. In one embodiment, the covering agent may be grafted beforehand onto the polymer. It may also be used in the free state (i.e. not grafted beforehand) or grafted to the surface of the silica.

Coupling agents which bind to the silanol groups of silica in order to inhibit the agglomeration thereof and which also function to covalently link the silica fillers to the rubber component matrix may be present. The appropriate amount of any coupling agent can be determined by those skilled in the art having in mind factors such as its molecular weight, the number of functional groups it contains and its reactivity. Most coupling agents may be used in an iso-molar amount based on the amount of silica. The coupling agent for use in the vehicle tire compositions of the present invention is not particularly limited and may be any of those known to the person skilled in the art. In one embodiment, the coupling agent may be grafted beforehand onto the polymer. It may also be used in the free state (i.e. not grafted beforehand) or grafted to the surface of the silica.

Typically, the coupling agent will be a silane coupling agent, for example a bifunctional silane. For example, the silane coupling agent may be one or more selected from the group consisting of bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl)tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N dimethylthiocarbamoyl tetrasulfide, and dimethoxymethylsilylpropylbenzothiazolyl tetrasulfide. Preferably, the silane coupling agent is bis(3-triethoxysilylpropyl) tetrasulfide. A specific example of the silane coupling agent for use in the invention is Si 39@ from Evonik Industries AG. The amount of the silane coupling agent is not particularly limited, but may be from 2 to 20 phr, preferably from 5 to 18 phr, more preferably from 5 to 15 phr.

The vehicle tire compositions according to the invention may be prepared by methods known in the art and will involve the step of introducing the RHA silica filler and lignin sulfonate into the rubber component to produce a vulcanizable rubber compound, in other words mixing (also known as compounding) the rubber component and the RHA silica, lignin sulfonate and any other components herein described to produce a vulcanizable rubber compound. In preparing the tire composition of the invention, the method for combining each of the components is not limited and any of the methods known in the art may be used. For example, all of the components may be blended and kneaded at once or they may be blending and kneaded in multiple steps. For blending and kneading, a kneader such as roll kneader, internal mixer or Banbury mixer may be used. For moulding the tire composition into any desired shape, for example into a sheet or strip shape, any known moulding machine such as an extrusion moulding machine or press moulding machine may be used.

Mixing of the components will usually be carried out in stages in which the components may be added. Multi-step mixing processes are generally preferred to optimise dispersion of the RHA silica and lignin sulfonate and may involve the use of more than one mixer, for example different mixers arranged in series. For example, in the case of mixing a tire tread compound, the mixing process may involve an initial mixing stage in which a masterbatch is produced, followed by one or more additional non-productive mixing stages, and finally a productive mixing stage in which the curative agents (i.e. sulfur or sulfur-donating agents and accelerator(s)) are added. Mixers which may be used are well known in the art and include, for example, an open mill or a Banbury type mixer having tangential or intermeshing rotors.

Typically, the rubber, RHA silica and lignin sulfonate, along with any optional processing aids, zinc oxide, stearic acid, anti-degradants (e.g. anti-oxidants, antiozonants), pigments, additional fillers, compatibilising agents, and coupling agents (where present) are mixed to produce the initial masterbatch. This initial masterbatch may be followed by another masterbatch in which additional fillers and additives are added, or by a non-productive mixing stage in which no additional components are added. Any non-productive mixing stage may be used to further disperse the components (e.g. fillers) within the rubber, or to decrease the viscosity of the mixed rubber compound.

During mixing, the temperature is kept below a predetermined level to avoid premature cross-linking of the composition. Typically, the temperature may be kept below 150°C, preferably below 140°C. In producing the initial masterbatch, mixing may for example be carried out a temperature of from about 80 to about 110°C, e.g. about 100°C. In the non-productive mixing stage the temperature may be raised, for example up to about 150°C, e.g. about 130°C. If any additional compatibilising agents are added during mixing, it may be necessary to carry out mixing at higher temperatures to ensure that these react with the silica surface. Mixing times may vary but can readily be determined by those skilled in the art based on the composition of the mixture and the type of mixer used. Generally, a mixing time of at least 1 minute, preferably between 2 and 30 minutes, should be sufficient to obtain the desired homogenous composition.

A final mixing stage involves the addition of curatives, including accelerator(s), anti-degradants. The temperature for this mixing stage will generally be lower, for example in the range of from about 40 to about 60°C, e.g. about 50°C. This final mix may also be followed by a further non-productive mixing stage in which no additional components are added.

The most appropriate type of mixing can readily be selected to achieve a vulcanizable rubber compound. Mixing speeds may readily be determined, but may for example range from a speed of from about 20 to about 100 rpm, e.g. from about 30 to about 80 rpm, preferably about 50 rpm.

The vulcanizable rubber compound may be provided as an uncured (so-called "green") tire component for final vulcanisation that cures the composition. Curing to cross-link the rubber components may be carried out by known methods. Accordingly, a subsequent step of the process is to subject the vulcanizable rubber compound to vulcanization by heating to a predetermined temperature and for a predetermined time. In the tire industry, for example, an uncured rubber (so-called "green body") is produced followed by curing in a press mold which concurrently cross-links the rubber components and molds the components into a final tire. Vulcanisation cures the rubber by cross-linking, principally via sulfur cross-links. Vulcanisation methods and conditions for hardening the tire composition are well known to those skilled in the art. Appropriate vulcanisation conditions typically include heating to a predetermined temperature in the range from 120 to 200°C, e.g. from 140 to 180°C, for a predetermined duration of from 5 to 180 mins, e.g. from 5 to 120 mins.

The vehicle tire compositions herein described find particular use in the manufacture of vehicle tires, in particular in the manufacture of tire components such as tire treads. Tire treads may be used for tires for any vehicle, but they find particular use in the manufacture of tire treads for motor cars.

As above, it is important in the present invention that RHA silica is used in combination with the lignin sulfonate. Accordingly, the invention relates to the use of rice husk ash silica in a vehicle tire composition, wherein the vehicle tire composition comprises 100 phr of a rubber component and 2 to 25 phr lignin sulfonate.

The invention is illustrated further by way of the following non-limiting Examples.

**Examples**

Measurement methods

Mooney Viscosity

Mooney viscosity was measured in accordance with the ASTM D1646 standard.

Elastic Modulus (E')

The Elastic Modulus (E') is used to evaluate grip performance. Dynamic physical testing to determine E' at 30°C was conducted in accordance with the ISO 4664 standard.

Potassium Content

The metal content, including potassium, in the RHA silica is measured by Inductively Coupled Plasma - Optical Emission Spectroscopy (ICP-OES) in accordance with ISO 19050:2021 (en). In brief, the silica elements are dissolved in hydrochloric acid. The solution is digested on a hot plate to solubilize the elements of interest and then analyzed in the instrument.

Weak (WK) Coefficient

The weak coefficient of the RHA silica is measured by laser light scattering based on the principle of laser diffraction, as set out in US 6,180,076, the contents of which are incorporated herein by reference. The measurement is performed using a CILAS Granulometer 1064 L. For the determination, 1.3 g of the precipitated silica is transferred into 25 ml water and treated with ultrasound at 100W (90% pulsed) for 4.5 minutes. Thereafter, the solution is transferred to the measuring cell and treated with ultrasound for a further minute. The detection with the aid of two laser diodes at different angles to the Sample is carried out during the ultrasonic treatment. The laser beams are diffracted in accordance with the principle of diffraction of light. The diffraction pattern formed is evaluated with the aid of a computer. The method enables the particle size distribution to be determined over a wide measurement range (approx. 40 nm-500 $\mu$m).

The curves are produced to show a first maximum in the particle size distribution in the range of 1.0-100 $\mu$m, and a further maximum in the range of <1.0 $\mu$m. The peak in the range of 1.0-100 $\mu$m indicates the proportion of non-comminuted silica particles after the ultrasonic treatment. These quite coarse particles are poorly dispersed in the rubber mixtures. The second peak of significantly smaller particle size (<1.0 $\mu$m) indicates that portion of particles of the silica which has been comminuted during the ultrasonic treatment. These very small particles are excellently dispersed in rubber mixtures.

The WK coefficient is thus the ratio of the peak height of the non-degradable particles (B), the maximum of which lies in the range of 1.0-100 $\mu$m, to the peak height of the degraded particles (A), the maximum of which lies in the range of <1.0 mm.

$$\text{WK Coefficient} = B / A$$

Where:

B = peak height of the non-degradable particles (max. in the range 1-100 $\mu$m); and
A = peak height of the degraded particles (max. in the range <1 $\mu$m).

The WK coefficient is therefore a measure of the "degradability" (= dispersibility) of the silica. A precipitated silica is more readily dispersible the smaller the WK coefficient and the more particles are degraded during incorporation into rubber. A key point here is that the energy input by ultrasound is a simulation of the energy input by mechanical forces in the kneaders of the tire industry. It has shown that the WK Coefficient is a measure of the dispersibility of a precipitated silica.

Cetyltrimethylammonium bromide (CTAB) adsorption method

The CTAB specific surface area is the external surface. The surface area of the RHA silica was measured by the CTAB method according to ISO 5794-1G.

Brunauer-Emmet-Teller (BET) specific surface area

The average specific surface area of the RHA silica is determined by N2 adsorption according to the BET method as described in the Journal of the American Chemical Society, Vol. 60, page 309, February 1938, and corresponding to standard NF ISO 5794-1, Appendix D (June 2010).

General method

The following components were compounded in a Banbury mixer in the amounts recited in Table 2 below.

Components

Elastomers:
Functionalised solution styrene-butadiene rubber (ENEOS HPR520) (SSBR) Natural Rubber (NR)

Silica: Sand Silica (STD-SiO$_2$) (Ultrasil VN3, Evonik)
Rice Husk Silica (STD-SiO$_2$) (K160, Wilmar)

Hydrocarbon resins:

Hydrogenated resin 1 (Synthomer Impera E1780) (Res1 C5-H)
Hydrogenated resin 2 (Synthomer Impera E1775) (Res2 C9-H)

Further Additives:

Recycled Carbon Black (Bolder Black REC CB, Bolder Industries)
Silane (Evonik Industries Si69)
Ligin Sulfonate (Borresperse NA, Borregaard Lignotech)
Ground rubber
Higilite
Sulfur
1,3-diphenyl guanidine (DPG)
Zinc oxide (ZnO)
Stearic acid (ST. Ac)
N-cyclohexyl-2-benzothiazyl sulfenamide (CBS)
2,2,4-trimethyl-1,2-dihydroquinoline polymer (TMQ)
N-(1,3-Dimethylbutyl)-N'-phenyl-p-phenylenediamine (6PPD)
Microcrystalline wax blend (Wax)
Tetrabenzylthiuram disulfide (TBzTD)
Zn salt of fatty acid
N'-(1,3 dimethylbutylene)-3-hydroxy-naphthohydrazide (BMH)

Silica Properties

Table 1 - Silica properties

| | Sand Silica (STD-SiO$_2$) Ultrasil VN3, Evonik | RHA Silica (STD-SiO$_2$) K160, Wilmar |
|---|---|---|
| **Feedstock** | Sand | RHA |
| **Surface area by BET in m$^2$/g** | 174 | 144 |
| **Surface area by CTAB in m$^2$/g** | 164 | 153 |
| **K$^+$ in ppm (as measured by ICP)** | 41 | 142 |

Tire Composition

The components in table 2, given in phr, were compounded in accordance with the general method set out above:

Table 2

| | CTRL 1 Sand Silica | EXP 1 Sand Silica | CTRL 2 RHA Silica | EXP 2 RHA Silica |
|---|---|---|---|---|
| **RHA Silica** | 0 | 0 | **65** | **65** |
| **Sand Silica** | **65** | **65** | 0 | 0 |
| **Sulfonate Lignin** | **0** | **10** | **0** | **10** |
| **SSBR fxt High Tg** | 60 | 60 | 60 | 60 |
| **NR** | 40 | 40 | 40 | 40 |
| **Recycled CB** | 5 | 5 | 5 | 5 |
| **Si69** | 12.16 | 12.16 | 12.16 | 12.16 |
| **Res1 C5-H** | 10 | 10 | 10 | 10 |
| **Res2 C9-H** | 10 | 10 | 10 | 10 |
| **Higilite** | 10 | 10 | 10 | 10 |
| **Ground Rubber** | 10 | 10 | 10 | 10 |
| **Sulfur** | 1.1 | 1.1 | 1.1 | 1.1 |
| **DPG** | 1 | 1 | 1 | 1 |
| **CBS** | 1 | 1 | 1 | 1 |
| **TBzTD** | 0.15 | 0.15 | 0.15 | 0.15 |
| **St. Ac.** | 2 | 2 | 2 | 2 |
| **ZnO** | 2.5 | 2.5 | 2.5 | 2.5 |
| **TMQ** | 0.22 | 0.22 | 0.22 | 0.22 |
| **Wax** | 1 | 1 | 1 | 1 |
| **6PPD** | 1.6 | 1.6 | 1.6 | 1.6 |
| **Zn Salt** | 3 | 3 | 3 | 3 |
| **BMH** | 0.5 | 0.5 | 0.5 | 0.5 |

A series of tests was carried out on the resulting compounds, in accordance with the measuring techniques set out above. The results are set out in Table 3.

Table 3

| | CTRL1 Sand Silica | EXP1 Sand Silica | CTRL 2 RHA Silica | EXP2 RHA Silica |
|---|---|---|---|---|
| **RHA Silica** | 0 | 0 | **65** | **65** |

(continued)

| | CTRL1 Sand Silica | EXP1 Sand Silica | CTRL 2 RHA Silica | EXP2 RHA Silica |
|---|---|---|---|---|
| **Sand Silica** | **65** | **65** | 0 | 0 |
| **Lignin sulfonate** | 0 | **10** | 0 | **10** |
| **Mooney viscosity by RPA (relative to CTRL)** | 100 | 84 | 100 | 81 |
| **Cpd Stiffness by E' @ 30°C (relative to CTRL)** | 100 | 102 | 100 | 107 |

From the results in Table 3, we can see that lignin sulfonate acts as a stiffness enhancer in the rubber compounds. The effect of the lignin sulfonate is enhanced when RHA silica is used in place of sand silica having a similar surface area. As explained above, without being bound by theory, the inventors believe that the higher content of potassium ions ($K^+$) present in RHA silica can lead to enhanced interactions between the silica and lignin sulfonate due to electrostatic forces. Consequently, lignin's efficacy as a stiffness enhancer is increased.

**Claims**

1.    A vehicle tire composition comprising: 100 phr of a rubber component; 50 to 160 phr silica obtained from rice husk ash; and 2 to 25 phr lignin sulfonate.

2.    A vehicle tire composition according to preceding claim 1, which comprises 50 to 120 phr of said silica, preferably 50 to 90 phr of said silica.

3.    A vehicle tire composition according to any preceding claim, which comprises 5 to 20 phr lignin sulfonate, preferably 5 to 15 phr lignin sulfonate.

4.    A vehicle tire composition according to any preceding claim, wherein the rubber component comprises: butadiene rubber (BR); styrene-butadiene rubber (SBR); natural rubber (NR); or combinations thereof; preferably wherein the rubber component comprises solution-polymerised styrene butadiene rubber (SSBR) and natural rubber (NR).

5.    A vehicle tire composition according to claim 4, which comprises 40 to 80 phr solution-polymerised styrene butadiene rubber, preferably 50 to 70 phr, or about 60 phr solution-polymerised styrene butadiene rubber; and 20 to 60 phr natural rubber, preferably 30 to 50 phr natural rubber, or around 40 phr natural rubber.

6.    A vehicle tire composition according to any preceding claim, wherein said silica has a CTAB surface area of at least 100 $m^2$/g, preferably at least 120 $m^2$/g, preferably at least 140 $m^2$/g, and/or wherein said silica has a CTAB surface area of up to 220 $m^2$/g, preferably up to 200 $m^2$/g, preferably up to 170 $m^2$/g.

7.    A vehicle tire composition according to any preceding claim, wherein said silica has a potassium content of less than or equal to 500 ppm based on the silica and as measured by inductively coupled plasma mass spectrometry as described in the Examples, preferably wherein the said silica has a potassium content of less than or equal to 400 ppm, preferably less than 350 ppm, and/or wherein said silica has a potassium content of greater than or equal to 100 ppm based on the silica, preferably greater than or equal to 200 ppm or 300 ppm.

8.    A vehicle tire composition according to any preceding claim, wherein said silica has a weak coefficient of less than or equal to 20 as measured by laser light scattering as described in the Examples, preferably wherein said silica has a weak coefficient of less than or equal to 15, preferably less than or equal to 10.

9.    A vehicle tire composition according to any preceding claim which further comprises aluminium hydroxide.

10.    A vehicle tire comprising a vehicle tire composition as claimed in any one of claims 1 to 9.

11.    A process for producing a vehicle tire composition as claimed in any one of claims 1 to 9, said process comprising the steps of introducing a silica filler and lignin sulfonate into a rubber matrix to produce a vulcanizable rubber compound; and subjecting said vulcanizable rubber compound to vulcanization by heating to a predetermined temperature and for a predetermined time; wherein the composition comprises 50 to 160 phr silica filler which is obtained from rice husk ash, and 2 to 25 phr lignin sulfonate.

12. Use of rice husk ash silica in a vehicle tire composition, wherein the vehicle tire composition comprises 100 phr of a rubber component and 2 to 25 phr lignin sulfonate.

13. Use of rice husk ash silica in a vehicle tire composition that contains lignin sulfonate to improve the stiffness enhancing properties of the lignin sulfonate.

Europäisches
Patentamt

European
Patent Office

Office européen
des brevets

**EUROPEAN SEARCH REPORT**

Application Number

EP 23 22 0089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2009 108308 A (TOYO TIRE & RUBBER CO) 21 May 2009 (2009-05-21) * paragraph [0001] * * paragraph [0043] - paragraph [0046] * * example 4; table 2 * | 1-13 | INV. B60C1/00 C08L9/06 |
| A | EP 4 238 782 A1 (SUMITOMO RUBBER IND [JP]) 6 September 2023 (2023-09-06) * paragraph [0001] - paragraph [0004] * * paragraph [0189] * * examples 1-8; table 1 * | 1-13 | |

TECHNICAL FIELDS
SEARCHED (IPC)

B60C
C08L

The present search report has been drawn up for all claims

| Place of search | Date of completion of the search | Examiner |
|---|---|---|
| Munich | 31 May 2024 | Laïb, Samia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 22 0089

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | | Publication date | Patent family member(s) | | Publication date |
|---|---|---|---|---|---|
| JP 2009108308 | A | 21-05-2009 | DE | 102008050966 A1 | 20-05-2009 |
| | | | JP | 5242324 B2 | 24-07-2013 |
| | | | JP | 2009108308 A | 21-05-2009 |
| | | | US | 2009099281 A1 | 16-04-2009 |
| EP 4238782 | A1 | 06-09-2023 | CN | 116691232 A | 05-09-2023 |
| | | | EP | 4238782 A1 | 06-09-2023 |
| | | | JP | 2023129249 A | 14-09-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3770115 A

- US 6180076 B

### Non-patent literature cited in the description

- *Maejo Int. J. Sci. Technol.*, 2012, vol. 6 (03), 430-448
- *Maejo Int. J. Sci. Technol*, 2012, vol. 6 (03), 430-448

- *Chemistry, Processing and Utilization*, 2019, 207
- *Journal of the American Chemical Society*, February 1938, vol. 60, 309
- *NF ISO 5794-1, Appendix D*, June 2010